# EUROPEAN PATENT APPLICATION

(11) **EP 3 482 936 A1**
(43) Date of publication of application: **15.05.2019**
(21) Application number: 18150222.0
(22) Date of filing: 03.01.2018
(51) Int. Cl.: B33Y 30/00, B29C 64/245

(54) **PLATFORM STRUCTURE OF 3D PRINTER AND CARRIER THEREOF**

(30) Priority: 13.11.2017 CN 201711116380
(71) Applicant: XYZprinting, Inc., New Taipei City 22201 (TW); Kinpo Electronics, Inc., New Taipei City 22201 (TW)
(72) Inventor: LEE, Yang-Teh, 22201 New Taipei City (TW); JUANG, Jia-Yi, 22201 New Taipei City (TW); Huang, Chun-Hsiang, 22201 New Taipei City (TW); HO, Ming-En, 22201 New Taipei City (TW)
(74) Representative: 2K Patentanwälte Blasberg Kewitz & Reichel

(57) **Abstract**

A platform structure of 3D printer and an additivity carrier thereof are provided. The platform structure of 3D printer includes a movable platform (1), a magnet (2) and an additivity carrier (3). The magnet (2) is mounted on the movable platform (1). The additivity carrier (3) includes a base plate (31), a metal thin plate (32), a magnetic layer (33) and a plastic thin plate (34). The metal thin plate (32) is laminated and attached on the base plate (31). The magnetic layer (33) is laminated and attached on the metal thin plate (32). The plastic thin plate (34) is laminated and attached on the magnetic layer (33). The additivity carrier (3) can be magnetically attracted by the magnet (2) through the magnetic layer (33) to make the additivity carrier (3) removably connected to the movable platform (1). As a result, the platform structure (10) has a function of conveniently and rapidly assembling or dissembling the additivity carrier (3).

## Description

### Background of the Invention

### 1. Technical field

The technical field relates to a platform structure, particularly to a platform structure of 3D printer and additivity carrier thereof.

### 2. Description of Related Art

3D printing is one of rapid prototyping techniques. It uses a movable platform to drive a work carrier and then layers of material such as metal or plastic powder are formed under computer control to create an object on the work carrier, which is made by additive manufacturing (AM). Currently, toy components, mechanic parts and human bones can be rapidly manufactured by 3D printing. This makes 3D printing progressively become a popular technology.

To make the work carrier accurately move to every predetermined position, however, the work carrier is usually firmly locked or tightly mounted on the movable platform for stably driving the work carrier by the movable platform. When the work carrier is needed to be removed from the movable platform, it will require complicated steps and cost much time. This causes a problem of inconveniently assembling and dissembling the work carrier and movable platform.

### Summary of the Invention

The disclosure is directed to a platform structure of 3D printer and an additivity carrier thereof, which uses a magnetic attraction force or separation between a magnet and a magnetic layer of the additivity carrier to conveniently and rapidly assemble or dissemble an additivity carrier in the platform structure.

One of the exemplary embodiments, the disclosed example provides a platform structure of 3D printer including a movable platform, a magnet and an additivity carrier. The magnet is mounted on the movable platform. The additivity carrier includes a base plate, a metal thin plate, a magnetic layer and a plastic thin plate. The metal thin plate is laminated and attached on the base plate. The magnetic layer is laminated and attached on the metal thin plate. The plastic thin plate is laminated and attached on the magnetic layer. The additivity carrier can be magnetically attracted by the magnet through the magnetic layer to make the additivity carrier removably connected to the movable platform. The additivity carrier can be removably connected to the movable platform.

One of the exemplary embodiments, the disclosed example provides an additivity carrier of 3D printer including a base plate, a metal thin plate, a magnetic layer and a plastic thin plate. The metal thin plate is laminated and attached on the base plate. The magnetic layer is laminated and attached on the metal thin plate. The plastic thin plate is laminated and attached on the magnetic layer. Hardness of the base plate is greater than that of the metal thin plate and that of the plastic thin plate.

According to the above, in the process of removing the additivity carrier from or putting the additivity carrier on the movable platform, the additivity carrier needs to resist the magnetic force of the magnet or the force exerted by an operator's hands or a robot hand. Because the base plate possesses great hardness, deformation, bending or breakage of the additivity carrier can be avoided. As a result, the additivity carrier has a feature of great structural strength.

According to the above, the magnetic layer is attached on the metal thin plate, the metal thin plate is a carrier stably covering the magnetic layer. The plastic thin plate is the top layer over the additivity carrier. The plastic thin plate provides the finished object (printed object) a surface which is easy to perform active manufacturing. As a result, the additivity carrier has an advantage of structural stability and convenient 3D printing.

### Brief Description of the Drawings

FIG. 1 is an assembled view of 3D printer of the disclosed example;
FIG. 2 is an exploded view of the platform structure of the disclosed example;
FIG. 3 is an assembled view of the platform structure of the disclosed example;
FIG. 4 is an exploded view of the additivity platform of the disclosed example; and
FIG. 5 is a cross-sectional view of the additivity platform of the disclosed example

### Detailed Description of the Invention

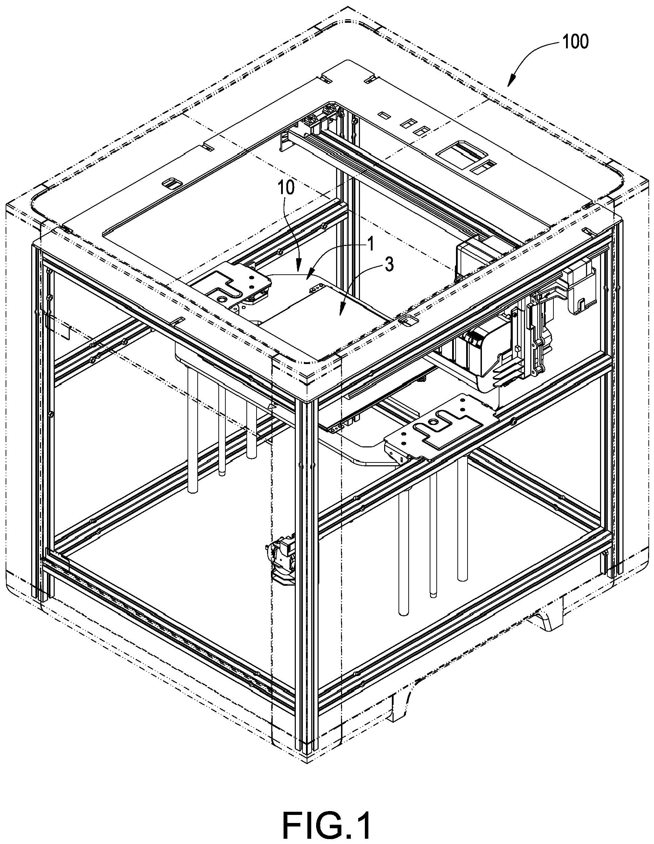

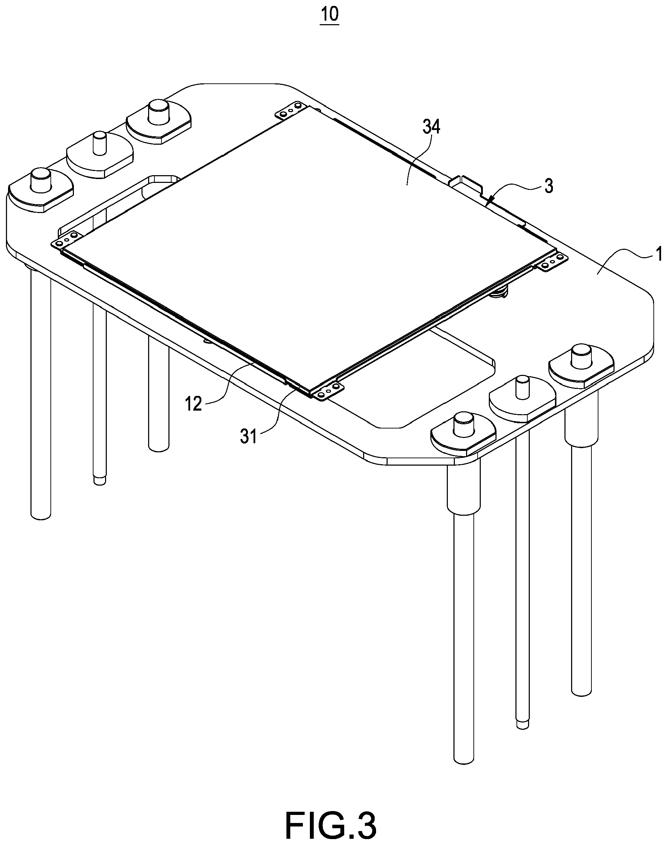

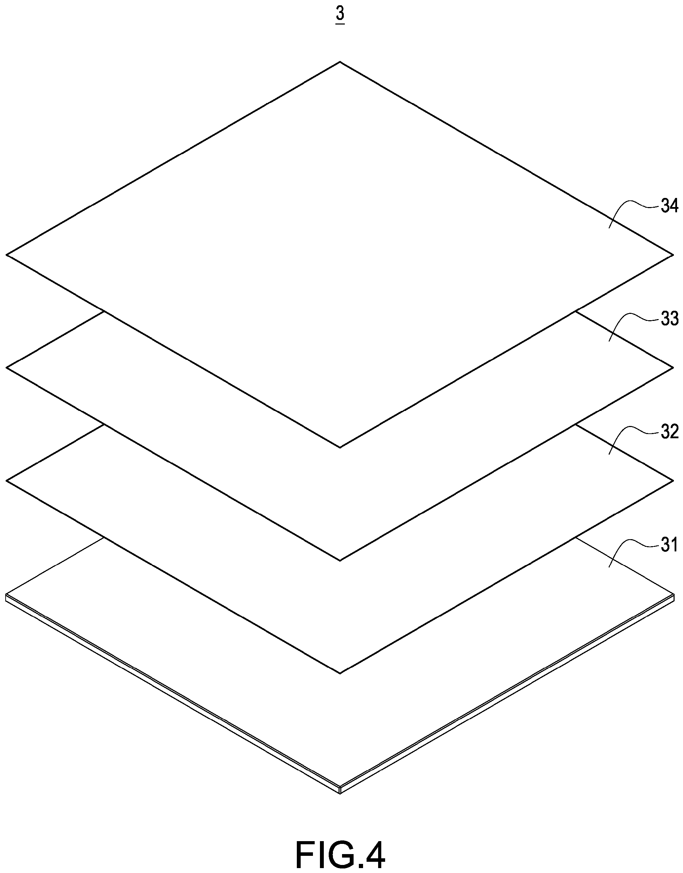

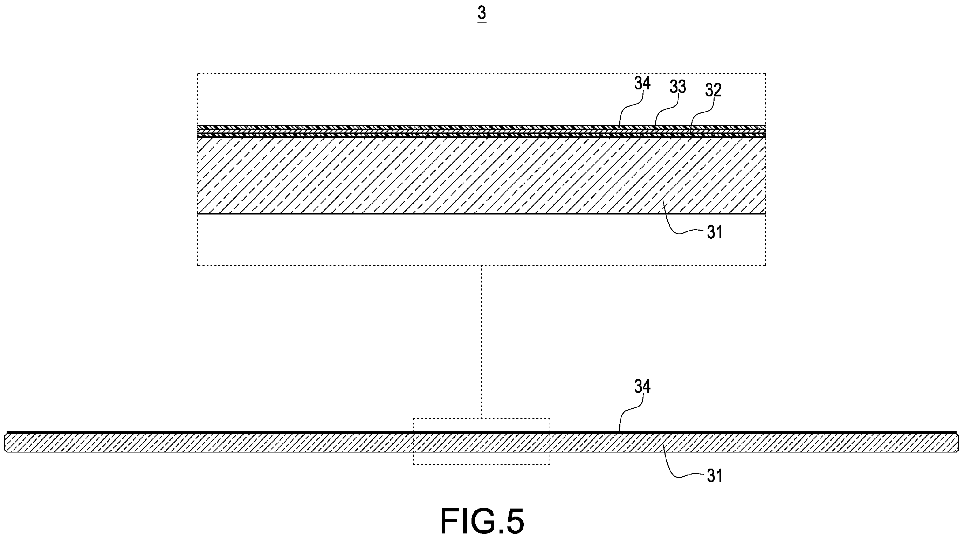

Please refer to FIGS. 1-5. The disclosed example provides a platform structure of 3D printer and additivity carrier thereof. The platform structure includes a movable platform 1, a magnet 2 and an additivity carrier 3. The additivity carrier 3 includes a base plate 31, a metal thin plate 32, a magnetic layer 33 and a plastic thin plate 34.

As shown in FIGS. 1-3, the movable platform 1 is a platform which can moves in three dimensional directions in a 3D printer 100. The movable platform 1 has a loading area 11. The movable platform 1 has a plurality of stopping strips 12 extending from a periphery of the loading area 11.

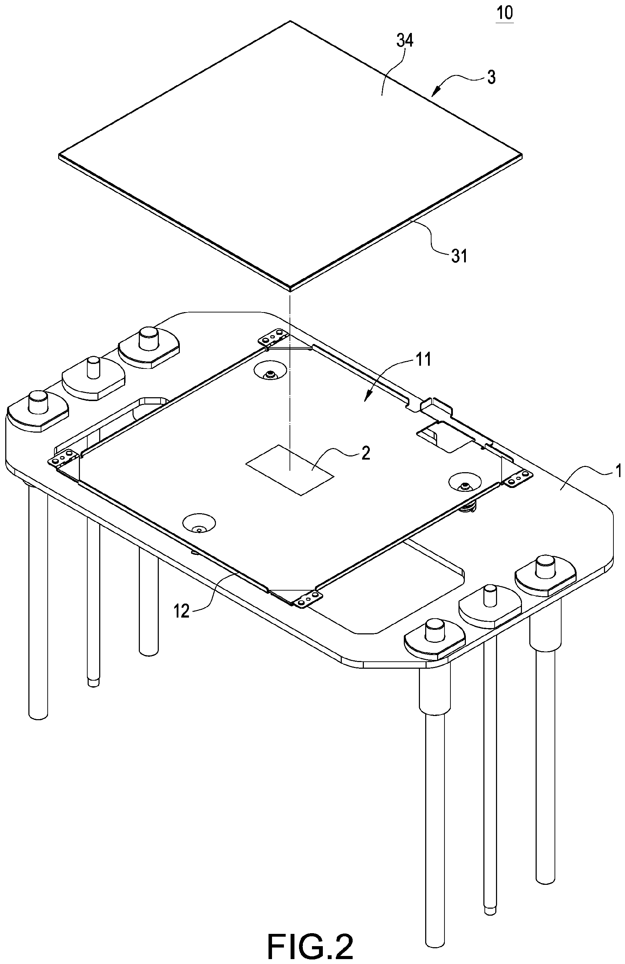

As shown in FIG. 2, the magnet 2 is mounted on the movable platform 1. The magnet 2 may be an electromagnet or a permanent magnet. In detail, the magnet 2 of the embodiment is mounted at, but not limited to, the canter of the loading area 11.

As shown in FIGS. 1-5, the additivity carrier 3 is a carrier onto which an object to be printed or a finished object is loaded. The additivity carrier 3 includes a base plate 31, a metal thin plate 32, a magnetic layer 33 and a plastic thin plate 34. The base plate 31 is made of a glass or ceramic material. The metal thin plate 32 is laminated and attached on the base plate 31. The magnetic layer 33 is laminated and attached on the metal thin plate 32. The plastic thin plate 34 is laminated and attached on the magnetic layer 33. Hardness of the base plate 31 is greater than that of the metal thin plate 32 and that of the plastic thin plate 34.

In detail, the additivity carrier 3 is put on the loading area 11 and positioned by the stopping strips 12 to make the additivity carrier 3 positioned on the movable platform 1 and stably move with the movable platform 1.

The additivity carrier 3 can be magnetically attracted by the magnet 2 through the magnetic layer 33 to make the additivity carrier 3 removably connected to the movable platform 1. In other words, the additivity carrier 3 can be assembled onto or dissembled from the movable platform 1.

As shown in FIGS. 1-5, statuses of combination and use of the platform structure 10 and the additivity carrier 3 of the disclosed example, it utilizes the additivity carrier 3 including the magnetic layer 33. When the magnet 2 is an electromagnet, open the magnetic force of the magnet 2 and put the additivity carrier 3 on the movable platform 1 with an operator's hands or a robot hand, the magnet 2 will magnetically attract the magnetic layer 33 to install the additivity carrier 3 on the movable platform 1. When closing the magnetic force of the magnet 2 to eliminate the magnetic attraction force between the magnet 2 and the magnetic layer 33, the additivity carrier 3 can be rapidly separated or removed from the movable platform 1 with an operator's hands or a robot hand. As a result, a function of conveniently and fast assembling and dissembling the additivity carrier 3 in the platform structure 10 can be achieved.

Additionally, when the magnet 2 is a permanent magnet, put the additivity carrier 3 on the movable platform 1 with an operator's hands or a robot hand, the magnet 2 will magnetically attract the magnetic layer 33 to install the additivity carrier 3 on the movable platform 1. When an operator's hands or a robot hand exerts a force which is greater than the magnetic attraction force between the magnet 2 and the magnetic layer 33, the additivity carrier 3 can be separated and removed from the movable platform 1. As a result, a function of conveniently and fast assembling and dissembling the additivity carrier 3 in the platform structure 10 can be achieved.

Furthermore, the metal thin plate 32, the magnetic layer 33 and the plastic thin plate 34 are laminated on the base plate 31, i.e., the base plate 31 is the bottom layer on the additivity carrier 3. In the process of removing the additivity carrier 3 from or putting the additivity carrier 3 on the movable platform 1, the additivity carrier 3 needs to resist the magnetic force of the magnet 2 or the force exerted by an operator's hands or a robot hand. Because the base plate 31 possesses great hardness, deformation, bending or breakage of the additivity carrier 3 can be avoided. As a result, the additivity carrier 3 has a feature of great structural strength.

Moreover, the magnetic layer 33 is attached on the metal thin plate 32, the metal thin plate 32 is a carrier stably covering the magnetic layer 33. The plastic thin plate 34 is the top layer over the additivity carrier 3. Because the plastic thin plate 34 is similar to a finished object (printed object) in material, the plastic thin plate 34 can provide the finished object (printed object) a surface which is easy to perform active manufacturing. As a result, the additivity carrier 3 has an advantage of structural stability and convenient 3D printing.

## Claims

1. A platform structure of 3D printer, comprising:
a movable platform (1);
a magnet (2) mounted on the movable platform (1); and
an additivity carrier (3), comprising a base plate (31), a metal thin plate (32), a magnetic layer (33) and a plastic thin plate (34), the metal thin plate (32) being laminated and attached on the base plate (31), the magnetic layer (33) being laminated and attached on the metal thin plate (32), the plastic thin plate (34) being laminated and attached on the magnetic layer (33), and hardness of the base plate (31) being greater than that of the metal thin plate 32 and that of the plastic thin plate (34);
wherein the additivity carrier (3) can be magnetically attracted by the magnet (2) through the magnetic layer (33) to make the additivity carrier (3) removably connected to the movable platform (1).

2. The platform structure of 3D printer of claim 1, wherein the base plate (31) is made of a glass or ceramic material.

3. The platform structure of 3D printer of claim 2, wherein the movable platform (1) has a loading area (11), the movable platform (1) has a plurality of stopping strips (12) extending from a periphery of the loading area (11), and the additivity carrier (3) is put on the loading area (11) and positioned by the stopping strips (12).

4. The platform structure of 3D printer of claim 3, wherein the magnet (2) is an electromagnet.

5. The platform structure of 3D printer of claim 3, wherein the magnet (2) is a permanent magnet.

6. An additivity carrier of 3D printer, comprising:
a base plate (31);
a metal thin plate (32); laminated and attached on the base plate (31);
a magnetic layer (33); laminated and attached on the metal thin plate (32); and
a plastic thin plate (34), laminated and attached on the magnetic layer (33), and hardness of the base plate (31) being greater than that of the metal thin plate (32) and that of the plastic thin plate (34).

7. The platform structure of 3D printer of claim 6, wherein the base plate (31) is made of a glass or ceramic material.
